# EUROPEAN PATENT APPLICATION

(11) **EP 2 626 450 A1**
(43) Date of publication of application: **14.08.2013**
(21) Application number: 12154517.2
(22) Date of filing: 08.02.2012
(51) Int. Cl.: C25D 11/12, C25D 11/24, C25D 11/26, C25D 11/04, G02B 1/11, C25D 1/10

(54) **Method of manufacturing nanostructures on a surface, on a mould and on an optical element, and an optical element as such manufactured.**

(71) Applicant: Nederlandse Organisatie voor toegepast- natuurwetenschappelijk onderzoek TNO, 2628 VK Delft (NL)
(72) Inventor: Chin, Patrick, 2628 VK Delft (NL)
(74) Representative: Jansen, Cornelis Marinus

(57) **Abstract**

The present invention is directed to a method of manufacturing nanostructures on a surface of a metal substrate, comprising forming said nanostructures by means of a forming step, said forming step including subsequently performing at least once the steps of anodizing said surface of said substrate at a second voltage for forming at said surface an second oxidized metal layer comprising second pores; and performing an etching step on said surface for modifying the dimensions of said second pores; wherein prior to said forming step said method comprises a substrate preparation step for enabling the forming a mix of different sized nanostructures during said forming step, said preparation step including the steps of anodizing said surface at a first voltage for forming at said surface an first oxidized metal layer comprising first pores; selectively etching said surface for extending said first pores into said metal underneath said first oxidized metal layer; and removing said first oxidized metal layer.

## Description

### Field of the invention

The present invention is directed to a method of manufacturing nanostructures on a surface of a metal substrate, comprising forming said nanostructures by means of a forming step, said forming step including subsequently performing at least once the steps of: anodizing said surface of said substrate at a second voltage for forming at said surface an second oxidized metal layer comprising second pores; and performing an etching step on said surface for modifying the dimensions of said second pores.

The invention is further directed to a method of manufacturing a mould, and a method of manufacturing an optical element from such mould, comprising method steps as defined above. Furthermore the invention is directed to an optical element as such manufactured.

### Background

Optical reflections of various optical surfaces (eg. windows, lenses, filters etc.) often influence the optical performance of a system that is operated or used by its optical properties. The often encountered negative effects of non-desired optical reflections in optical systems are typically reduced by the application of reflection reducing coatings on these surfaces. These so-called anti reflection (AR) coatings are often composed of defined layers of different refractive index materials to reduce the reflectivity. For many applications this approach is not sufficient and a broadband AR coating is desired.

Nature solved this challenge by the creation of nanostructures which can be found on the compound eye of insects (moth eye). Various methods have been shown in literature how to create nanostructure textures on different surfaces. The challenge however lies in the fact that for many applications large area coverage is desired.

One of the most promising methods for large area nano structuring for moth eye AR coatings is the use of alternating steps of etching and anodizing. When anodizing a metal surface (aluminum) typically a closed aluminum oxide (alumina) layer is formed. This aluminum oxide layer is amorphous and consists of interconnected islands of alumina with a nanopore in the middle. This results over large areas in a closely packed nanopore structure over the entire surface. European patent application EP1643546, for example, describes how alternating anodizing and etching steps can be used to create an inverted moth eye structure in an aluminum/alumina layer. The inverted nanostructures in this structure have all the same shape and dimension, and may be used as a mould for creating a positive structure.

Although the moth eye anti reflection coatings and surfaces outperform most other type of AR coatings, these conventional moth eye structure surfaces still fall short in performance for a number of high end application with strict requirements. Thereto, latest developments in this field are directed to the design of hybrid moth eye structure surfaces. A hybrid moth eye structure surface is a moth eye surface comprising nanostructures of different dimensions. The challenge however lays in the fact that such hybrid moth eye structure surfaces are difficult to manufacture.

### Summary of the invention

It is an object of the present invention to obviate the problems of the prior art, and to provide a method for manufacturing nanostructures on a surface, such as a hybrid moth eye type anti reflective surface that can be applied to large surfaces effectively and with sufficient quality in the end product.

The above mentioned objects and advantages of the invention are achieved in that there is provided a method of manufacturing nanostructures on a surface of a metal substrate, comprising forming said nanostructures by means of a forming step, said forming step including subsequently performing at least once the steps of: anodizing said surface of said substrate at a second voltage for forming at said surface an second oxidized metal layer comprising second pores; and performing an etching step on said surface for modifying the dimensions of said second pores; wherein prior to said forming step said method comprises a substrate preparation step for enabling the forming a mix of different sized nanostructures during said forming step, said preparation step including the steps of: anodizing said surface at a first voltage for forming at said surface an first oxidized metal layer comprising first pores; selectively etching said surface for extending said first pores into said metal underneath said first oxidized metal layer; and removing said first oxidized metal layer.

The invention is directed to preparing the metal substrate such that a precise and accurate distribution of pores is formed prior to the regular consecutive steps of anodizing and etching. The forming of such pores is performed by performing an additional step of anodizing, followed by a selective etching step. During the selective etching step, the dept of the pores is extended all the way into the metal underneath the first oxidized metal layer. As a next step, the first oxidized metal layer is removed from the surface, thereby leaving the first pores in the metal intact.

The invention is based on the insight that by performing an additional anodizing step, a regular distribution of first pores across the surface of the metal substrate is achieved. By deepening these first pores into the metal underneath the first oxidized metal layer, and subsequently removing the first oxidized metal layer, a metal substrate is created wherein a number of regularly organized distributed pores are present on the surface.

If this preparation step is followed by a regular method of anodizing and etching, this yields a surface comprising nanostructures having different dimensions. These differently dimensioned nanostructures are regularly organized across the surface of the metal substrate. The nanostructures formed therewith resemble a negative master structure that may be used as a mould. The negative master structure consists of a distribution of deep and shallow indentations. The deep indentations coincide with the locations of the first pores during the preparation step. The shallow indentations are formed in between the deep indentations.

A positive master structure for creating an optical element, such as a hybrid moth eye structure anti reflective element, may be provided by filling the nanopore structure thus created using a liquid polymer or metal. This liquid polymer or metal is then cured and separated from the mould for providing the positive master structure. Separating the negative master structure from the positive master structure may for example be easily performed by removing the oxidized metal in between both parts (positive and negative) of the master structure.

Preferably, in the method of the present invention, during the preparation step, the first voltage used during anodization is larger than the second voltage which is used during the forming step of the method. As may be appreciated, the distance between the first pores being formed during anodization and (related thereto) the size of the interconnected islands of oxidized metal in between the pores, is proportional with the anodization potential. If the anodization step is performed at a higher voltage level, the distance between the first pores becomes larger. As a result it becomes possible to control the surface density of the first pores formed during the preparation step by controlling the first voltage used during the anodization step of the preparation step. By increasing the first voltage, the number of first pores per square centimetre, and therewith the number of large nanostructures in the end result, decreases. Using a first voltage which is larger than the second voltage, the number of sparsely distributed large nanostructures are created on the surface, with a plurality of smaller nanostructures in between (the latter being created during subsequent alternating anodizing and etching steps).

The etchant used during the selective etching step during preparation is preferably selected such as to be suitable for etching the metal more intensively than the metal oxide. As a result, performing etching on the first pores will primarily deepen the first pores as soon as the metal underneath the oxidized metal layer has been reached during etching.

Although the metal substrate may be made of a number of different candidate metals, preferably, the metal substrate consists of aluminium, even more preferably aluminium having a degree of purity of 99,99%. High purity of at least 99,99% is preferred for avoiding deformations in the end result due to impurities in the anodizing layer.

Moreover, for improving the end result, the preparation step, after removing the first oxidizing layer, may further comprise the steps of anodizing said surface at a third voltage for forming at said surface a third oxidized metal layer comprising third pores; and removing said third oxidized metal layer. These additional steps result in less variation of dimensions between individual nanostructures of a same size.

Also in addition to the above, according to a further embodiment, the preparation step may be preceded by one or more steps selected from comprising heat treating of said metal substrate; polishing of said surface of said metal substrate; cleaning of said surface of said metal substrate. The above suggested optional additional method steps enable to obtain a more smooth surface of the metal substrate which fits the requirements for a desired optical surface roughness, in particular for an anti reflective optical element.

According to a further aspect of the present invention there is provided a method of manufacturing a mould for forming an optical element. This method comprises a manufacturing method as described herein above.

According to yet another third aspect of the invention there is provided a method of manufacturing an optical element using a mould as suggested above.

The invention, according to a fourth aspect, is directed to an optical element manufactured using a method as defined herewith, in particular according to an embodiment thereof, a hybrid moth eye structure anti reflective element.

### Brief description of the drawings

The invention will further be elucidated by description of some specific embodiments thereof, making reference to the attached drawings, wherein:
Figures 1a-1i disclose a metal substrate and an optical element during each stage of a method according to an embodiment of the present invention.
Figure 2 schematically illustrated an overview of a method in accordance with an embodiment of the present invention.

### Detailed description

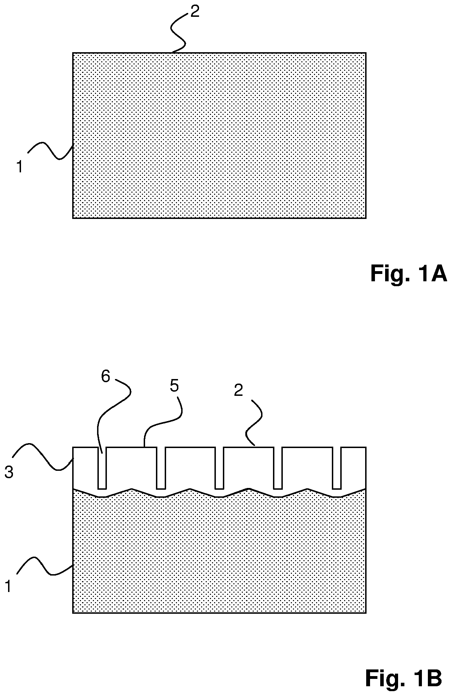

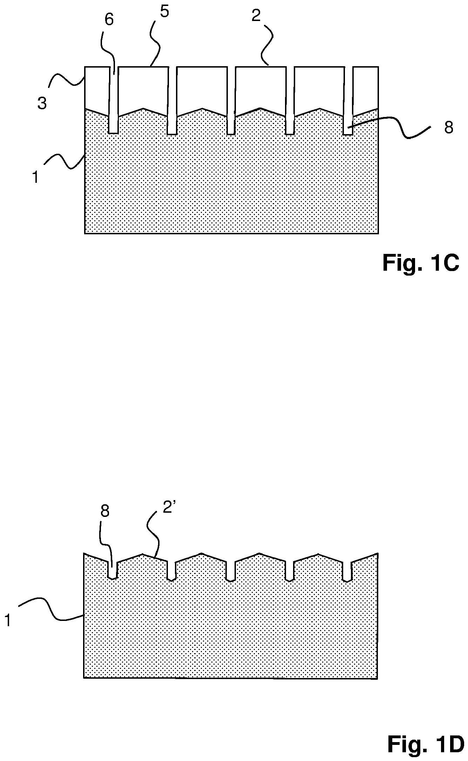

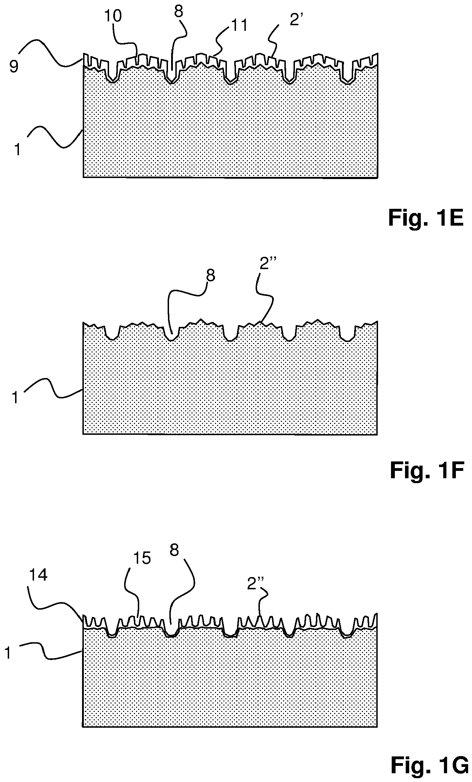

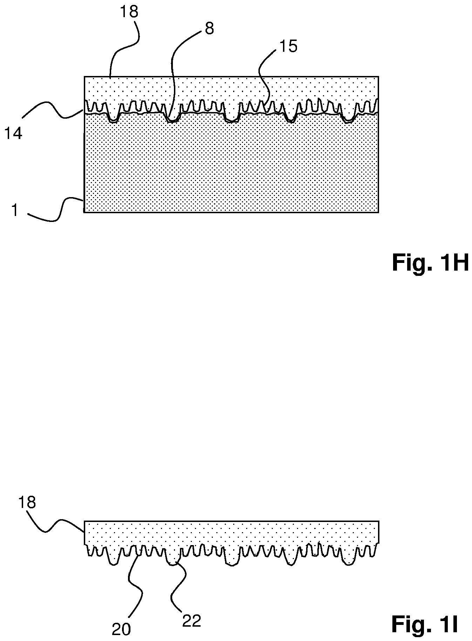

Figure 1a-1i disclose a metal substrate during a number of consecutive method steps of a method in accordance with an embodiment of the present invention. Eventually, in Figure 1i, there is disclosed an optical element as created using a manufacturing method of the present invention.

In Figure la, the method starts with metal substrate 1, schematically illustrated as a block. The surface 2 of the metal substrate 1 will be the subject of a plurality of method steps for creating nanostructures forming a negative master structure for manufacturing an optical element therewith. The metal substrate 1 is preferably made of aluminium having a degree of purity of at least 99,99%. Alternatively, the metal substrate may be made of aluminium having a different degree of purity, or even a different metal that is suitable for processing by means of anodization, such as titanium, zinc, magnesium, niobium, and tantalum, and any alloys comprising at least one of these elements.

The use of aluminium having a degree of purity of at least 99,99% is preferred in order to provide a surface 2 which is (to a large degree) void of impurities that may give rise to undesired deformations during the anodization step. Optionally, prior to the actual start of the manufacturing process, the surface 2 of the metal substrate may be heat treated, polished and/or cleaned such as to obtain a smooth surface that fits the requirement for desired optical surface roughness.

With or without the optional steps of heat treating, polishing and cleaning of the surface, the manufacturing method according to the present invention primarily exists of a preparation phase and a forming phase. During the preparation phase, the substrate is prepared in such a manner that it will be straightforward during the forming phase to create nanostructures of different sizes. As will be appreciated, this is required in order to achieve a hybrid moth eye structure type surface rather than a moth eye structure type surface having nanostructures that on averagely have all the same size.

The preparation step starts with a step of anodizing at a first voltage. The results of the step of anodizing are illustrated schematically in Figure lb. Figure lb again shows the metal substrate 1. On a surface 2 of the metal substrate, as a result of the anodization step, a first metal oxide layer is present. Assuming that the method has started with a metal substrate made of aluminium having a degree of purity of at least 99,99%, the first metal oxide layer 3 is a layer of alumina (Al₂O₃). The anodization step has created a typically closed aluminium oxide (alumina) layer, which is amorphous and consists of interconnected islands 5 of alumina with nanopores 6 in between. Typically, the size of the interconnected alumina islands 5 is proportional with the anodization potential: the first voltage. The packing and localization of the alumina islands is caused by coulomb interactions between the charged domains. As a result, more or less regularly distributed across the surface 2 of the metal substrate 1 the nanopores 6 are formed in between the alumina islands 5. The depth of the nanopores is slightly less than the thickness of the alumina layer 3. As a result, the bottom of each nanopore 6 is not in contact with the aluminium of the metal substrate 1 underneath the alumina layer 3.

The next step in the process is the step of selective etching performed mainly in the nanopores 6. The selective etching is performed using an etchant such that etching of the aluminium is performed more intensively than etching of the metal oxide. An example of such an etchant is known as PES 77-19-04 (the chemical composition at 30 °C being: H₃PO₄ : CH₃COOH : HNO₃ = 77: 19: 04). This etchant provides good results, although this is certainly not the only suitable etchant available and the invention is not limited to this specific etchant. The etching of the nanopores 6 results in deepening of the bottom of each pore until the aluminium is reached. Then, since the etchants more intensively etches away the aluminium than the aluminium oxide, the etching step mainly results in the nanopores 6 extending a certain distance 8 into the aluminium of the metal substrate 1 underneath the alumina layer 3. This is illustrated schematically in Figure lc. In Figure lc, the metal substrate 1 with the alumina layer 3 is illustrated, again indicating the alumina islands 5 and the nanopores 6. Each of the nanopores 6 extends over a certain distance 8 into the metal underneath the alumina layer 3 as a result of the selective etching step.

After the step of selective etching, the alumina layer 3 is removed by means of any suitable method therefore. As will be appreciated, the alumina layer 3 may be removed by another selective etching step using chromic acid. This leaves the aluminium underneath the alumina layer 3 in tact, and primarily removes only the alumina layer. The result of this step is illustrated in Figure 1d. Figure 1d again illustrates the metal substrate 1 with this time only the ends 8 of the nanopores present on the (new) top surface 2' of the metal substrate 1.

Optionally, and in accordance with the preferred embodiment, a further step of anodization is performed at a second voltage level, the second voltage being lower than the first voltage. Since the second voltage is lower than the first voltage, the size of alumina islands 11 will be smaller than the size of the alumina islands 5 that resulted after the first anodization step. As a result of the present anodization step at the second voltage level, a large number of alumina islands 11 with nanopores 10 in between will be present on the surface 2', as illustrated in Figure 1e. Further to this, the ends 8 of the original pores 6 that extend to a more deeper level into the aluminium of the metal substrate 1 are also still present in the surface 2', as illustrated in Figure 1e.

In the next method step, the alumina layer 9 created by the last anodization step is removed, and the result is illustrated in Figure If. The new surface 2" is a rather rough surface consisting of small indentations alternated by the pores 8. This is the end of the preparation phase of the manufacturing method.

In the subsequent forming phase of the manufacturing method, a multistep anodization and etching procedure is carried for forming the 5 desired nanostructures on the surface 2". The step of anodization may be carried out at the second voltage level creating small islands of alumina with nanopores in between. The etching step will widen all of the pores slightly, after which a further deepening is carried out by (optionally) performing an additional anodization and etching step. The steps of anodization and etching may be carried out a number of times for creating nanostructures of desired size (having pores of a desired width). In Figure 1g, the end result of this step is visible, again illustrating the metal substrate 1 of aluminium, with an aluminium oxide layer 14 on top. The aluminium oxide layer 14 consists of a large number of pores 15 which are every so often alternated by the pores 8. Figure 1g resembles the result after the manufacturing method of the present invention providing a negative master structure or mould that enables to create a positive master structure or optical element comprising nanostructures as desired. The mould is formed by the metal substrate 1. The mould 1 as such created is covered by a suitable polymer or metal in a liquid (e.g. molten) state for manufacturing the positive master structure or optical element.

The result of covering the surface 2" of the mould 1 with the liquid polymer is illustrated in Figure lh. Here, the metal substrate 1 or mould 1 is illustrated having the alumina layer 14 comprising the large pores 8 and the smaller pores 15 in between. These are covered with a layer of liquid or molten material 18, e.g. a polymer of a suitable kind, or a metal or the like. The liquid layer 18 is then cured using any suitable method, after which the positive master structure 18 is to be separated from the negative master structure or mould 1. Separation may be performed by removing the alumina layer 14 using any suitable method, e.g. selective etching. In Figure 1i, the optical element 18 which is created using this method is illustrated, having smaller nanostructures 20 and larger nanostructures 22 on the surface thereof. The surface consisting of small nanostructures 20 and large nanostructures 22 resembles a hybrid moth eye structure type surface.

As will be appreciated, the larger nanostructures 22 have been created as a result of the preparation step or preparation phase performed prior to the forming step. The preparation step included a step of anodizing of the surface 2 of the metal substrate 1 at a first voltage level. It is recalled that the size of the alumina islands 5 in Figure 1b, and thereby the locations of the nanopores 6 and the distance in between, is proportional to the magnitude of the first voltage used during anodization. The nanopores 6 were then deepened by means of selective etching. As will be appreciated, these steps may optionally be repeated at again a different voltage level e.g. for creating eventually nanostructures of three or more different sizes.

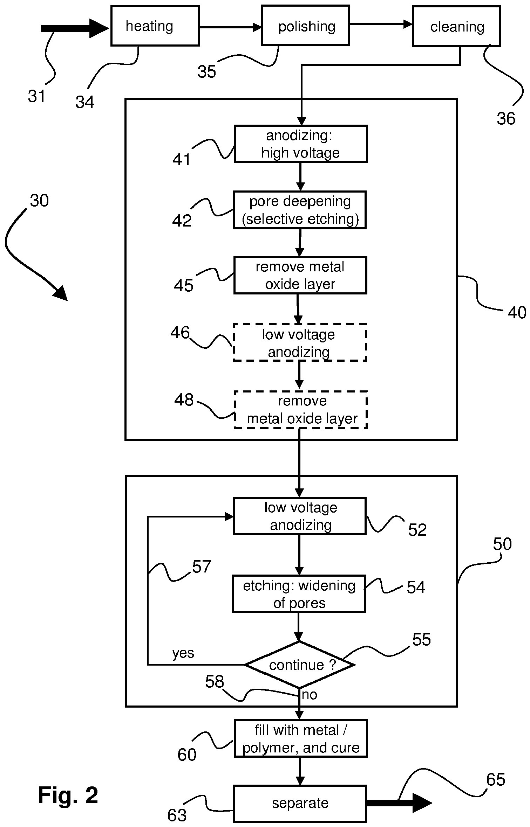

Figure 2 schematically illustrates the method of the present invention. The method 30 starts with providing the metal substrate 31, and subjecting the surface of the metal substrate consecutively to the steps of heating 34, polishing 35 and cleaning 36. As already explained above, the steps of heating, polishing and cleaning (34, 35, 36) are optional steps and may be dispensed with. However, in the preferred embodiment, these steps are performed prior to the preparation phase of the manufacturing method 30.

After cleaning in step 36, the preparation phase 40 starts with the step of anodizing 41 which is performed at a first (high) voltage. This voltage is preferably taken to be within a range of 80V through 150V, more preferably 80V through 120V, for example 100V. This creates a first oxidized metal layer containing a number of first pores. These pores in step 42 are deepened by means of a selective etching process, as explained above. Then in step 45, the first metal oxide layer created during the anodization step is removed, for example again by means of a selective etching step using a different etchant (e.g. chromic acid).

Optionally, and in accordance with the preferred embodiment, in step 46 a further anodization is performed at a second voltage, wherein the second voltage is smaller than the first voltage. Comparatively, the second voltage may be a voltage selected within a range of 20V through 60V (preferably 30V through 50V, for example 40V). This anodization may be performed for any suitable duration. It has been experienced that, in accordance with the preferred embodiment, the duration of this anodization step at low second voltage is performed for a duration of at least 12 hours. Comparatively, the anodization at the first high voltage during the preparation phase 40 may also be performed for a long duration, preferably 12-15 hours. The anodization step at the lower second voltage in step 46 creates a third metal oxide layer on the metal substrate 1. In step 48, after the anodization of step 46, the third metal oxide layer is removed by means of, for example, an etching step using chromic acid. The preparation phase 40 is then complete, and the method continues with the forming phase 50.

During the forming phase 50 of the method 30, first the metal substrate 1 is subject to anodization at a low voltage level, e.g. this may be the second voltage level that is also used during step 46. This is followed by etching step 54 wherein the second pores formed in the second oxidized metal layer during anodization 52 are widened. Then after etching step 54, at the choice of the skilled person (step 55), the steps 52 and 54 may be repeated for as long as necessary such as to create nanostructures having the desired shape and size. Preferably, the steps 52 and 54 in this stage of the method of the present invention are performed multiple times the alternating manner as indicated. It has been found that good results are achieved by performing these steps five times, although the skilled person will appreciate that the number of times wherein these steps are performed may depart from this (e.g. once, 2 times, 3 times, 4 times, 6 times, 7 times, 8 times, etc.), dependent on the depth end width of the pores to be formed. The forming step 50 of the method then ends and a negative master structure or mould has been created from the metal substrate. Then in step 60, for creating an optical element or positive master structure, the mould is filled with a metal or polymer in a liquid state. This is cured or solidified, after which in step 63 the positive master structure is separated from the negative master structure, e.g. by removing the oxidized metal layer in between the positive master structure and the negative master structure as illustrated in Figure 1h.

The above described procedure is a wet chemical procedure which is based on anodization and etching. As a result, this process can be performed on large surfaces at once, for creating large hybrid moth eye structure type surfaces with a relatively small degree of defects. The density, shape, and size control of the nanostructures created are all based on physical and chemical parameters that may directly be controlled throughout the manufacturing process such as voltage, electrolyth, chrystal grain size, reaction time, etc. The method of the present invention is free of any mechanical, optical or other techniques for creating the desired surfaces. A skilled person however appreciates that, if this is for any reason considered beneficial, the method of the invention may be enhanced with any such steps at the choice of the skilled person.

In addition to the above, although the figures and embodiments described illustrate the method by applying it to a metal substrate in the form of a block (or plate), the method is not limited to such applications, and as a result of the fact that the method of the present invention is a wet chemical procedure, it may be applied to any object of arbitrary size and shape.

The present method can be used in the production of coatings for any optical system that is required to work over a broad spectral range. For example, the method may be applied for creating optical elements for (semiconductor) lithographic systems, lenses, or any other anti reflective surfaces. With the method of the present invention, the anti reflective properties of a surface may be extended to wave length ranges as large as between 200nm through 1100nm. The method of the present invention may also beneficially be applied for creating optical elements for use in astronomic appliances or in space. The coatings or elements created herewith will help to reduce stray light and may be applied to curved surfaces for which there is presently no suitable technique available.

The present invention has been described in terms of some specific embodiments thereof. It will be appreciated that the embodiments shown in the drawings and described here and above are intended for illustrative purposes only, and are not by any manner or means intended to be restrictive on the invention. The context of the invention discussed here is merely restricted by the scope of the appended claims.

## Claims

1. Method of manufacturing nanostructures on a surface of a metal substrate, comprising forming said nanostructures by means of a forming step, said forming step including subsequently performing at least once the steps of;
anodizing said surface of said substrate at a second voltage for forming at said surface an second oxidized metal layer comprising second pores; and
performing an etching step on said surface for
modifying the dimensions of said second pores;
wherein prior to said forming step said method comprises a substrate preparation step for enabling the forming a mix of different sized nanostructures during said forming step, said preparation step including the steps of:
anodizing said surface at a first voltage for forming at said surface an first oxidized metal layer comprising first pores;
selectively etching said surface for extending said first pores into said metal underneath said first oxidized metal layer; and
removing said first oxidized metal layer.

2. Method according to claim 1, wherein said first voltage is larger than said second voltage.

3. Method according to claim 1 or 2, wherein said first voltage is selected between 80 V and 150 V.

4. Method according to any of the previous claims, wherein during said preparation step, said step of selectively etching is performed using an etchant suitable for etching said metal more intensively than said metal oxide.

5. Method according to any of the previous claims, wherein said metal forming said metal substrate comprises at least one of a group comprising aluminium, in particular aluminium having a degree of purity of 99,99%, titanium, zinc, magnesium, niobium, and tantalum, and alloys comprising at least one of aluminium, titanium, zinc, magnesium, niobium, and tantalum.

6. Method according to any of the previous claims, wherein said anodizing step during said forming step is performed multiple times, and wherein said multiple anodizing steps are performed at different second voltages.

7. Method according to any of the previous claims, wherein during said forming step for said at least one anodizing step said second voltage is selected below 60 V.

8. Method according to any of the previous claims, wherein said preparation step, after removing said first oxidizing layer, further comprises the steps of:
anodizing said surface at a third voltage for
forming at said surface an third oxidized metal layer comprising third pores; and
removing said third oxidized metal layer.

9. Method according to any of the previous claims, wherein said step of removing said first oxidized metal layer is performed by selective etching, for leaving said metal underneath said first oxidized metal layer in tact.

10. Method according to any of the previous claims, wherein said preparation step is preceded by one or more steps selected form a group comprising:
heat treating of said metal substrate;
polishing of said surface of said metal substrate;
cleaning of said surface of said metal substrate.

11. Method of manufacturing a mould for moulding an optical element, such as an element comprising anti reflective surface, said method comprising a manufacturing method according to any of the previous claims for forming a mix of different sized nanostructures on a surface of said mould.

12. Method of manufacturing an optical element, such as a hybrid moth eye structure anti reflective element, comprising a step of manufacturing a mould according to claim 11, said mould including a nanostructure surface comprising a mix of differently sized nanostructures formed thereupon, and using said mould for manufacturing said optical element.

13. Optical element manufactured using a method in accordance with claim 11 or 12.

14. Optical element in accordance with claim 13, said optical element being a hybrid moth eye structure anti reflective element.
